# EUROPEAN PATENT SPECIFICATION

(11) **EP 3 031 587 B1**
(45) Date of publication and mention of the grant of the patent: **20.06.2018**
(21) Application number: 15198771.6
(22) Date of filing: 09.12.2015
(51) Int. Cl.: B27D 5/00, B23Q 11/00

(54) **SCRAPING ASSEMBLY FOR THE FINISHING OF WOOD PANELS OR THE LIKE**
SCHABERANORDNUNG ZUR ENDBEARBEITUNG VON HOLZPANEELEN ODER DERGLEICHEN
ENSEMBLE DE DÉCAPAGE POUR LA FINITION DE PANNEAUX EN BOIS OU SIMILAIRE

(30) Priority: 09.12.2014 IT BO20140686
(43) Date of publication of application: 15.06.2016
(73) Proprietor: BIESSE S.p.A., 61100 Pesaro (IT)
(72) Inventor: SALTARELLI, Roberto, 61122 pesaro (IT); SPADONI, Ernesto, 61122 Pesaro (IT)
(74) Representative: Manconi, Stefano

(56) References cited:
- EP-A2- 1 302 287
- EP-A2- 2 165 792
- DE-U1-202014 100 709
- GB-A- 1 192 785

## Description

The present invention relates to a scraping assembly for the finishing of wood panels or the like, according to the preamble of claim 1. Such a scraping assembly is known from document EP2165792A2. Each panel has two larger faces, which are parallel to one another, is delimited by a lateral profile, which is substantially transverse to the larger faces, and has a finishing edge, which is glued along at least part of the lateral profile.

The scraping assembly normally comprises a support frame; a feeding device to feed a plurality of panels in sequence along a straight path; at least one horizontal slider, which is coupled to the support frame in a sliding manner by means of the interposition of a first shock absorber device, so as to carry out horizontal movements relative to the support frame; and a pair of vertical sliders, which are coupled to the horizontal slide in a sliding manner by means of the interposition of respective second shock absorber devices, so as to carry out vertical movements relative to the horizontal slide.

The scraping assembly further comprises a pair of edge scraping tools, which are mounted on the vertical sliders, are associated with respective vertical copy attachments arranged, in use, in contact with the larger faces of the panel, and are associated, furthermore, with a front copy attachment arranged, in use, in contact with the finishing edge.

In use, the two edge scraping tools are arranged on opposite sides of the panel, the two vertical copy attachments are moved so as to come into contact with the larger faces, and the front copy attachment is caused to come into contact with the finishing edge.

As the panels are fed, the vertical copy attachments and the front copy attachment allow the edge scraping tools to correctly follow both the outline of the larger faces and the outline of the finishing edge and, therefore, to correctly carry out the scraping of two longitudinal corners of the finishing edge that are parallel to a feeding direction of the panels themselves.

During the processing of the panel, the edge scraping tools generate respective chip rods, which are sucked into at least one sucking hood.

The scraping assembly further comprises at least one detaching device to separate the chip rods from the relative panels.

The detaching devices used to separate the chip rods from the relative panels are usually available in three types.

According to a first type, the detaching device is defined by a scissors unit comprising a pair of blades that can move, within the feeding path of the panels, between the panel that has just been processed and the following panel, so as to cut the chip rod.

According to another type, the detaching device is defined by a clamp unit comprising a pair of jaws that can move, within the feeding path of the panels, between the panel that has just been processed and the following panel, so as to clamp and pull away the chip rod.

According to the last one of the types mentioned above, the detaching device comprises an oscillating blade, which drags on the finishing edge and cuts the chip rod when it is not supported any longer by the panel.

Known scraping assemblies of the type described above are affected by some drawbacks that are mainly due to the fact that the first two types of detaching devices require the insertion of the scissors or clamp units within the feeding path of the panels and, therefore, lead to a high risk of collision with the panels themselves, whereas the third type of detaching device requires the dragging of the oscillating blade on the panels and, therefore, leads to a serious risk of damaging the most delicate finishing edges and of breaking the oscillating blade itself.

It is an object of the present invention to provide a scraping assembly for the finishing of wood panels or the like, which is designed to eliminate the aforementioned drawbacks in a straightforward, relatively low-cost manner.

According to the present invention, there is provided a scraping assembly for the finishing of wood panels or the like according to the appended claims.

The present invention will now be described with reference to the accompanying drawings, which show a nonlimiting embodiment thereof, wherein:
figure 1 is a schematic perspective view, with parts removed for greater clarity, of a preferred embodiment of the scraping assembly according to the present invention;
figure 2 is a schematic perspective view, with parts removed for greater clarity, of a detail of the scraping assembly of figure 1; and
figure 3 is a schematic side view, with parts removed for greater clarity, of the detail of figure 2.

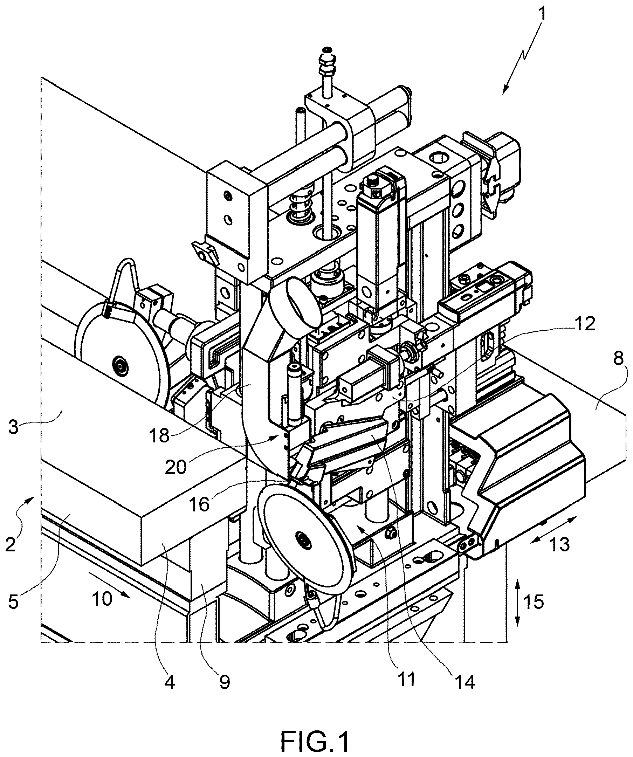

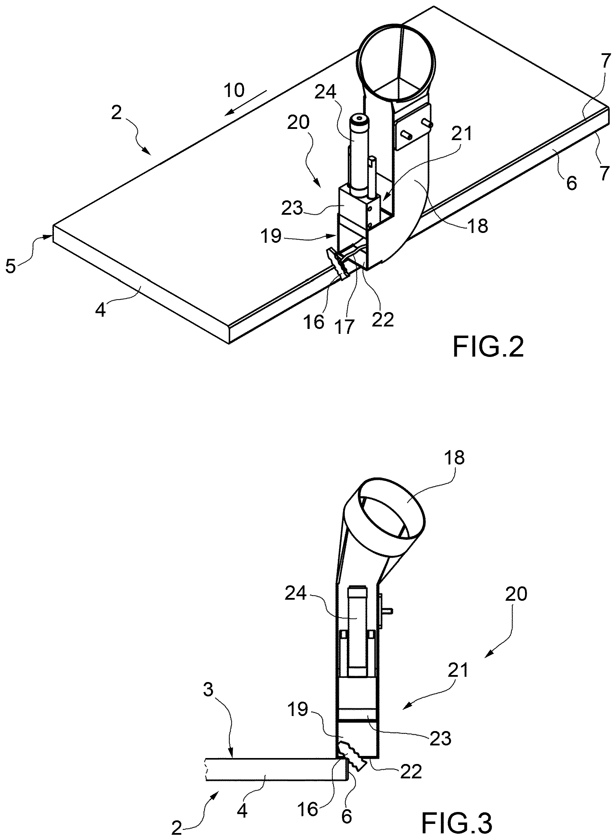

With reference to figures 1, 2 and 3, number 1 indicates, as a whole, a scraping assembly for the finishing of substantially flat wood panels 2 or the like.

In particular, each panel 2 substantially has the shape of a parallelepiped, and is delimited by two larger faces 3, which are parallel to one another, by two smaller faces 4, which are parallel to one another and perpendicular to the faces 3, and by two smaller faces 5, which are parallel to one another and perpendicular to the faces 3 and 4. Each face 4, 5 is provided with a finishing edge 6 having two longitudinal corners 7 opposite one another.

The scraping assembly 1 comprises a support frame 8 with an elongated shape; and a feeding device 9 to feed the panels 2 in sequence along a straight path P and in a horizontal direction 10.

In particular, the panels 2 are fed by the device 9 with the faces 4 perpendicular to the direction 10 and with the faces 5 parallel to the direction 10 itself.

The frame 8 supports two edge scraping units 11 (only one of them is shown in figure 1), each of which is designed to process one of the corners 7 of each edge 6, and comprises a horizontal slider 12, which is coupled to the frame 8 in a sliding manner by means of the interposition of a shock absorber device (not shown), so as to carry out straight movements relative to the frame 8 itself in a horizontal direction 13, which is transverse to the direction 10.

The unit 11 comprises, furthermore, a vertical slider 14, which is coupled to the relative slider 12 in a sliding manner by means of the interposition of a shock absorber device (not shown), so as to carry out straight movements relative to the slider 12 in a vertical direction 15, which is orthogonal to the directions 10 and 13.

The slider 14 supports a known edge scraping tool 16, which is designed to scrape one of the longitudinal corners 7 of each edge 6, and is associated with a vertical copy attachment (not shown) mounted on the slider 14 itself.

In use, the vertical copy attachment (not shown) is arranged in contact with the relative face 3. The thrust exerted upon the vertical copy attachment (not shown) and, therefore, upon the slider 14 by the panel 2 is substantially equal to the thrust exerted upon the slider 14 itself by the relative shock absorber device (not shown), so as to allow the edge scraping tool 16 to correctly follow the profile of the relative face 3 of the panel 2 being processed.

The edge scraping tool 16 is associated, furthermore, to a front copy attachment (not shown), which is fixed to the slider 12, and is arranged in contact with the edge 6. The thrust exerted upon the front copy attachment (not shown) and, therefore, upon the slider 12 by the panel 2 is substantially equal to the thrust exerted upon the slider 12 itself by the relative shock absorber device (not shown), so as to allow the edge scraping tool 16 to correctly follow the profile of the face 5 of the panel 2 being processed.

During the processing of the longitudinal corners 7 of the each panel 2, the edge scraping tools 16 generate respective chip rods 17, each sucked into a relative sucking hood 18.

In particular, figures 1 to 3 show the upper edge scraping unit 11 and the relative sucking hood 18, which is mounted above and on the outside of the path P, is arranged behind the edge scraping tool 16 in the direction 10, and is connected to a known pneumatic sucking device, which is not shown.

The hood 18 has an inlet mouth 19 arranged close to the upper edge scraping tool 16, and is designed to keep the rod 17 on the outside of the path P. According to the invention, once the panel 2 has been fed downstream of the edge scraping tool 16 in the direction 10, each rod 17 is separated from the panel 2 itself by a relative detaching device 20, which is mounted on the outside of the path P.

In particular, the device 20 is built-in in the hood 18, and comprises a clamp unit 21 comprising a fixed lower jaw 22 defining part of the mouth 19 of the hood 18 and an upper jaw 23, which is fixed to the output rod of an actuator cylinder 24 so as to move, in the direction 15, between a clamping position, in which the rod 17 is locked between the jaws 22, 23 and pulled away from the panel 2, and a release position.

According to some embodiments that are not shown:
the clamp unit 21 is removed and replaced with a scissors unit comprising a pair of blades, which are movable relative to one another from and to a position of detachment of the rod 17;
the device 20 is arranged on the inside of the hood 18;
the device 20 is arranged on the outside of the hood 18 between the edge scraping tool 16 and the hood 18 in the direction 10; and
the hood 18 and the device 20 are arranged on the outside and on the side of the path P.

As the detaching devices 20 are arranged on the outside of the path P and cannot interfere with the panels 2, the scraping assembly 1 ensures a relatively high degree of reliability.

Furthermore, the configuration and the arrangement of the detaching devices 20 prevent the units 21 from being dragged on the panels 2 and/or on the finishing edges 6, thus avoiding damages of the panels 2 and/or the edges 6.

## Claims

1. A scraping assembly for the finishing of wood panels (2) or the like, each panel (2) being provided with a finishing edge (6), which is applied along at least part of a lateral profile (4, 5) of the panel (2) itself, the scraping assembly comprising a feeding device (9) to feed a plurality of panels (2) along a path (P) in sequence; at least one edge scraping tool (16) projecting into the path (P) to carry out the machining of the finishing edge (6); at least one sucking hood (18) mounted on the outside of the path (P) to suck a chip rod (17) generated by the edge scraping tool (16); and a detaching device (20) mounted on the outside of the path (P) to separate the chip rod (17) from the panel (2); and being **characterized in that** the detaching device (20) comprises a clamp unit (21) comprising a pair of jaws (23, 24), which are mobile relative to one another between a clamping position and a release position, in which the chip rod (17) is clamped and released, respectively.

2. A scraping assembly according to claim 1, wherein the detaching device (20) is mounted on the inside of the sucking hood (18).

3. A scraping assembly according to claim 1, wherein the detaching device (20) is mounted at the inlet of the sucking hood (18).

4. A scraping assembly according to claim 1, wherein the detaching device (20) is mounted on the outside of the sucking hood (18).

5. A scraping assembly according to any of the previous claims, wherein the detaching device (20) is arranged above or under the path (P).

6. A scraping assembly according to any of the claims from 1 to 4, wherein the detaching device (20) is arranged on the side of the path (P).

7. A scraping assembly according to any of the previous claims and comprising, furthermore, a support frame (8); a horizontal slider (12), which is coupled to the support frame (8) in a sliding manner by interposing a first shock absorber device; and at least one vertical slider (14), which is coupled to the support horizontal slider (12) in a sliding manner by interposing a second shock absorber device; the edge scraping tool (16) being supported by the vertical slider (14).

## Patentansprüche

1. Schaberanordnung zur Endbearbeitung von Holzplatten (2) oder dergleichen, wobei jede Platte (2) mit einer Abschlusskante (6) versehen ist, die entlang wenigstens eines Teils eines seitlichen Profils (4, 5) der Platte (2) aufgebracht ist, die Schaberanordnung eine Zufuhreinrichtung (9) zum Zuführen einer Vielzahl von Platten (2) entlang eines Weges (P) in einer Abfolge umfasst; ferner wenigstens ein Kantenabschabwerkzeug (16), das in den Weg (P) hineinragt, um das Bearbeiten der Abschlusskante (6) auszuführen; wenigstens eine Saughaube (18), die auf der Außenseite des Weges (P) montiert ist, um eine Spanstange (17), die durch das Kantenabschabwerkzeug (16) erzeugt wurde, abzusaugen;
und eine Abnahmevorrichtung (20), die außerhalb des Weges (P) montiert ist, um die Spanstange (17) von der Platte (2) zu separieren;
und **dadurch gekennzeichnet, dass** die Abnahmevorrichtung (20) eine Klemmeinheit (21) umfasst, umfassend ein Paar von Klemmbacken (23, 24), die relativ zueinander beweglich sind zwischen einer Klemmposition und einer Löseposition, in welcher die Spanstange (17) jeweils geklemmt und freigegeben wird.

2. Eine Schaberanordnung gemäß Anspruch 1, wobei die Abnahmevorrichtung (20) auf der Innenseite der Saughaube (18) montiert ist.

3. Eine Schaberanordnung gemäß Anspruch 1, wobei die Abnahmevorrichtung (20) an dem Einlass der Saughaube (118) montiert ist.

4. Eine Schaberanordnung gemäß Anspruch 1, wobei die Abnahmevorrichtung (20) auf der Außenseite der Saughaube (18) montiert ist.

5. Eine Schaberanordnung gemäß einem der vorhergehenden Ansprüche, wobei die Abnahmevorrichtung (20) oberhalb oder unterhalb des Weges (P) angeordnet ist.

6. Eine Schaberanordnung gemäß einem der Ansprüche 1 bis 4, wobei die Abnahmevorrichtung (20) auf der Seite des Weges (P) angeordnet ist.

7. Eine Schaberanordnung gemäß einem der vorhergehenden Ansprüche und ferner umfassend: einen Tragrahmen (8); ein horizontales Gleitstück (12), welches an dem Tragrahmen (8) auf eine gleitende Art angeschlossen ist durch Zwischenschalten einer ersten Stoßdämpfervorrichtung; und wenigstens ein vertikales Gleitstück (14), welches an dem horizontalen Gleitstück (12) in einer gleitenden Art durch Zwischenschalten einer zweiten Stoßdämpfervorrichtung angeschlossen ist; wobei das Kantenabschabwerkzeug (16) durch das vertikale Gleitstück (14) getragen wird.

## Revendications

1. Ensemble de raclage pour la finition de panneaux de bois (2) ou similaires, chaque panneau (2) étant pourvu d'un bord de finition (6), qui est appliqué le long d'au moins une partie d'un profilé latéral (4, 5) du panneau (2) lui-même, l'ensemble de raclage comprenant un dispositif d'alimentation (9) pour alimenter en une pluralité de panneaux (2) le long d'un chemin (P) en séquence ; au moins un outil de raclage de bord (16) dépassant dans le chemin (P) pour réaliser l'usinage du bord de finition (6) ; au moins une hotte d'aspiration (18) montée sur l'extérieur du chemin (P) pour aspirer une tige de copeaux (17) générée par l'outil de raclage de bord (16) ; et un dispositif de détachement (20) monté sur l'extérieur du chemin (P) pour séparer la tige de copeaux (17) du panneau (2) ; et étant **caractérisé en ce que** le dispositif de détachement (20) comprend une unité de serrage (21) comprenant une paire de mâchoires (23, 24), qui sont mobiles l'une par rapport à l'autre entre une position de serrage et une position de libération, dans lesquelles la tige de copeaux (17) est serrée et libérée, respectivement.

2. Ensemble de raclage selon la revendication 1, dans lequel le dispositif de détachement (20) est monté sur l'intérieur de la hotte d'aspiration (18).

3. Ensemble de raclage selon la revendication 1, dans lequel le dispositif de détachement (20) est monté à l'entrée de la hotte d'aspiration (18).

4. Ensemble de raclage selon la revendication 1, dans lequel le dispositif de détachement (20) est monté sur l'extérieur de la hotte d'aspiration (18).

5. Ensemble de raclage selon l'une quelconque des revendications précédentes, dans lequel le dispositif de détachement (20) est agencé au-dessus ou en dessous du chemin (P).

6. Ensemble de raclage selon l'une quelconque des revendications 1 à 4, dans lequel le dispositif de détachement (20) est agencé sur le côté du chemin (P).

7. Ensemble de raclage selon l'une quelconque des revendications précédentes et comprenant, de surcroît, un cadre de support (8) ; une coulisse horizontale (12), qui est couplée au cadre de support (8) de manière coulissante en interposant un premier dispositif absorbeur de chocs ; et au moins une coulisse verticale (14), qui est couplée à la coulisse horizontale de support (12) de manière coulissante en interposant un second dispositif absorbeur de chocs ; l'outil de raclage de bord (16) étant supporté par la coulisse verticale (14).
